# EUROPEAN PATENT APPLICATION

(11) **EP 4 707 035 A1**
(43) Date of publication of application: **11.03.2026**
(21) Application number: 24859045.7
(22) Date of filing: 09.05.2024
(51) Int. Cl.: B60L 5/38, B60M 7/00

(54) **AUTOMOTIVE POWER RECEIVING DEVICE**

(30) Priority: 31.08.2023 JP 2023141811
(71) Applicant: AISIN CORPORATION, Kariya-shi, Aichi 448-8650 (JP)
(72) Inventor: YAMADA Taiki, Kariya-shi, Aichi 448-8650 (JP); AOKI Kenji, Kariya-shi, Aichi 448-8650 (JP); NIWA Eiji, Kariya-shi, Aichi 448-8650 (JP); FUJISAKI Dai, Kariya-shi, Aichi 448-8650 (JP); KITAMURA Yuichiro, Kariya-shi, Aichi 448-8650 (JP)
(74) Representative: Kramer Barske Schmidtchen Patentanwälte PartG mbB
(86) International application number: PCT/JP2024/017227
(87) International publication number: WO 2025/046996

(57) **Abstract**

In an automotive power receiving device (10), a support arm (52) is formed to have a larger dimension (L1) in a width direction (X) than a dimension in a thickness direction (Y) of the support arm (52), and a coupling mechanism (43) is configured to cause the support arm (52) to laterally rotate about a lateral rotation shaft center (A3), to take, in a contact position, a position in which a power receiver (45) is suspended by the support arm (52) and a thickness direction (Y) of the support arm (52) is along a horizontal direction, and take, in a stored position, a position in which the thickness direction (Y) of the support arm (52) is along an up-down direction (Z).

## Description

### TECHNICAL FIELD

The present invention relates to an automotive power receiving device that receives power supply from a power feeder installed on a road surface.

### BACKGROUND ART

There is known an automotive power receiving device that receives power supply from a power feeding facility including a power feeder installed on a road surface. US 2019/0111799 A (Patent Literature 1) discloses an automotive power receiving device including a power receiver (14a to 14c) that comes into contact with a power feeder (30a to 30b) that is installed on a road surface (11) to receive power supply.

### CITATIONS LIST

### PATENT LITERATURE

Patent Literature 1: US 2019/0111799 A

### SUMMARY OF INVENTION

### TECHNICAL PROBLEMS

In Patent Literature 1, an automotive power receiving device mounted on a vehicle is disposed so as to protrude on a lower side from a lower surface of a vehicle body. In a case where the automotive power receiving device protrudes on the lower side from the lower surface of the vehicle body in a non-power reception state where the automotive power receiving device does not receive power, there is a high possibility that the automotive power receiving device is damaged by coming into contact with unevenness of a road surface or an obstacle. Then, as a dimension of the automotive power receiving device in an up-down direction in the non-power reception state increases, a protrusion amount on the lower side of the automotive power receiving device tends to increase. As the protrusion amount on the lower side of the automotive power receiving device increases, the possibility that the automotive power receiving device comes into contact with unevenness or an obstacle on a road surface increases. Therefore, it is desirable to suppress the dimension of the automotive power receiving device to be small in the up-down direction in the non-power reception state.

Accordingly, it is desired to achieve an automotive power receiving device in which a dimension of the automotive power receiving device can be easily suppressed to be small in the up-down direction in the non-power reception state.

### SOLUTIONS TO PROBLEMS

An automotive power receiving device according to the present disclosure is an automotive power receiving device that is mounted on a vehicle and receives power supply during traveling of the vehicle, from a power feeding facility including a power feeder that is installed on a road surface of a road to extend along the road, the automotive power receiving device including: a base member to be attached to the vehicle; a power receiver configured to come in contact with the power feeder to receive power; a coupling mechanism that couples the base member and the power receiver; and a drive mechanism configured to change a position of the coupling mechanism between a contact position in which the power receiver is in contact with the power feeder and a stored position in which the power receiver is separated from the power feeder, in which the coupling mechanism includes: a support arm configured to support the power receiver; and a coupling member that couples the base member and the support arm, the support arm is coupled to the coupling member to be swingable about a swing shaft center, when a direction in which the support arm extends is defined as a longitudinal direction, a direction along the swing shaft center is defined as a thickness direction, and a direction orthogonal to both the longitudinal direction and the thickness direction is defined as a width direction, the support arm is formed to have a larger dimension in the width direction than a dimension in the thickness direction, and the coupling mechanism is configured to cause the support arm to laterally rotate about a lateral rotation shaft center along a direction intersecting the swing shaft center as viewed in an up-down direction, to take, in the contact position, a position in which the power receiver is suspended by the support arm and the thickness direction of the support arm is along a horizontal direction, and take, in the stored position, a position in which the thickness direction of the support arm is along an up-down direction.

According to this configuration, the contact position of the coupling mechanism is a position in which the thickness direction of the support arm is along the horizontal direction. Therefore, a load in the up-down direction acting from the power feeder or the road surface on the power receiver suspended by the support arm can be made to act in the width direction of the support arm. Therefore, it is easy to secure a strength of the support arm while reducing a weight of the support arm. In addition, lateral rotation of the support arm causes the coupling mechanism to take a position in which the thickness direction of the support arm is along the up-down direction in the stored position of the coupling mechanism, so that a disposition region of the support arm in the stored position can be easily suppressed to be small in the up-down direction. That is, it is easy to suppress a dimension of the automotive power receiving device to be small in the up-down direction in the non-power reception state. Thus, for example, even in a case where the coupling mechanism is disposed on a lower surface of the vehicle, it is easy to secure a wide gap between the road surface and the lower surface of the vehicle.

### BRIEF DESCRIPTION OF DRAWINGS

FIG. 1 is a top view of an automotive power receiving device according to an embodiment.
FIG. 2 is a side view of the automotive power receiving device of FIG. 1.
FIG. 3 is a side view illustrating a state where a coupling mechanism in FIG. 2 is in a contact position.
FIG. 4 is a side view illustrating a state where the coupling mechanism in FIG. 2 is in a contracted position.
FIG. 5 is a side view illustrating a state where the coupling mechanism of FIG. 2 is in a stored position.
FIG. 6 is a cross-sectional view illustrating a state where the coupling mechanism in FIG. 2 is in the contact position.
FIG. 7 is a cross-sectional view illustrating a state where the coupling mechanism in FIG. 2 is in the contracted position.
FIG. 8 is a cross-sectional view illustrating a state where the coupling mechanism of FIG. 2 laterally rotates.
FIG. 9 is a cross-sectional view illustrating a state where the coupling mechanism of FIG. 2 is in the stored position.
FIG. 10 is a side view of a transmission mechanism in a state where the coupling mechanism of FIG. 3 is in the contact position.
FIG. 11 is a cross-sectional view of the transmission mechanism in a state where the coupling mechanism of FIG. 3 is in the contact position.
FIG. 12 is a cross-sectional view of the transmission mechanism in a state where the coupling mechanism of FIG. 3 is in the stored position.

### DESCRIPTION OF EMBODIMENTS

Hereinafter, an embodiment of an article conveyance facility will be described with reference to the drawings.

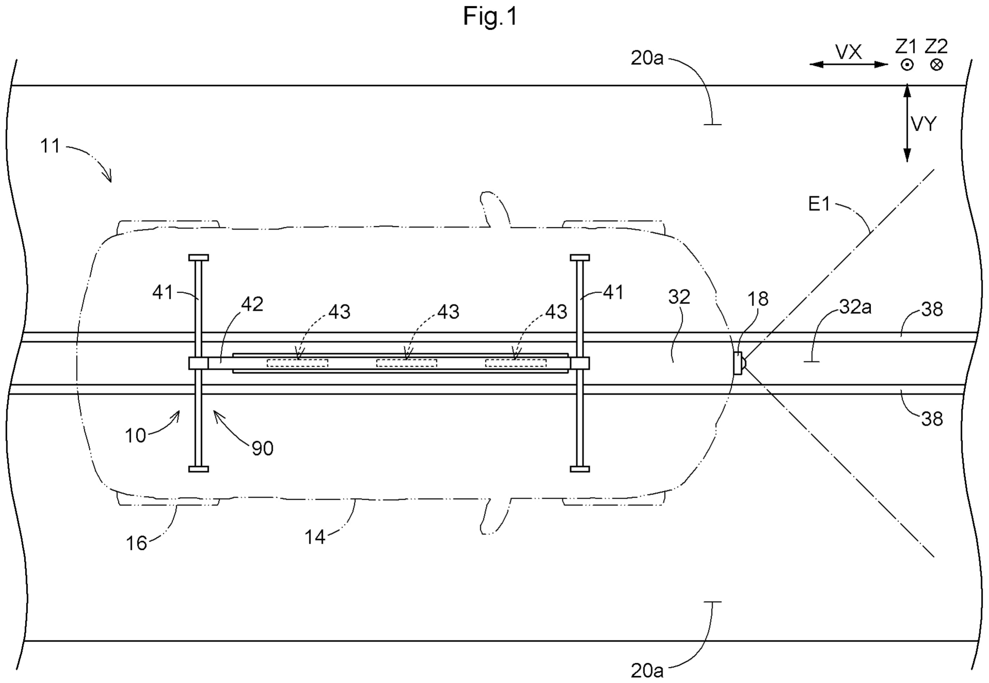

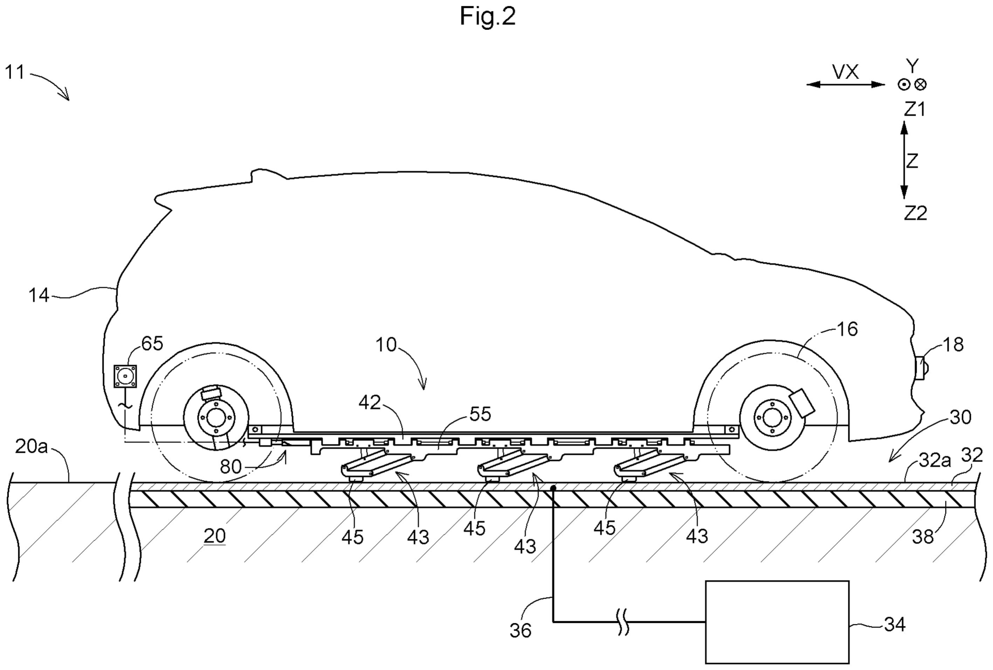

FIG. 1 is a top view of an automotive power receiving device 10 (hereinafter, referred to as a power receiving device 10). FIG. 2 is a side view of the power receiving device 10. The power receiving device 10 is mounted on a vehicle 11, and the power receiving device 10 receives power supply from a power feeding facility 30 while the vehicle 11 is traveling. Here, a front-rear direction of the vehicle 11 is referred to as a "vehicle front-rear direction VX", and a direction orthogonal to the vehicle front-rear direction VX as viewed in an up-down direction (vertical direction) is referred to as a "vehicle width direction VY".

As illustrated in FIGS. 1 and 2, the power feeding facility 30 includes a power feeder 32 that is installed on a road surface 20a of a road 20 so as to extend along the road 20. Here, regarding a shape of a member, "extending along a certain direction" is not limited to a shape in which, with a certain direction as the reference direction, an extending direction of the member is parallel to the reference direction. An extending direction of the whole or a part of the member may be a direction intersecting the reference direction, and "extending along a certain direction" is used as a concept including a shape in which the extending direction of the member as the whole is within a predetermined range (for example, 45 degrees or less) with respect to the reference direction. In the illustrated example, the vehicle front-rear direction VX is the same direction as the direction in which the power feeder 32 extends along the road 20.

In the present embodiment, the power feeding facility 30 includes a power source 34 and an electric wire 36. The power feeder 32 is connected to, for example, the power source 34 in a distant place by the electric wire 36 and supplied with power, and supplies power to the power receiving device 10 by coming into contact with a power receiver 45 provided in the power receiving device 10. In the illustrated example, the plate-shaped power feeder 32 and an insulator 38 that insulates the power feeder 32 from the road 20 are installed in a groove 24, which is dug in the road surface 20a and extends along the vehicle front-rear direction VX. In addition, a contact surface 32a, which is an upper surface of the power feeder 32 in contact with the power receiver 45, has the same height as that of the road surface 20a.

In the present embodiment, in order to acquire a locational relationship between the vehicle 11 and the power feeder 32 in the vehicle width direction VY, a power feeder detection device 18 that detects the power feeder 32 is provided in the vehicle 11. The power feeder detection device 18 may be an imaging device that captures an imaging range E1 including the road surface 20a, or may be a dedicated sensor that detects the power feeder 32. In a case where the power feeder detection device 18 is an imaging device, the power feeder 32 is detected from a captured image including the road surface 20a, for example, by image recognition. In the illustrated example, the power feeder detection device 18 is a front camera that captures the imaging range E1 including the road surface 20a in front in the vehicle front-rear direction VX, but may be a rear camera that captures an imaging range including the road surface 20a in rear in the vehicle front-rear direction VX. The vehicle 11 on which the power receiving device 10 is mounted is not particularly limited, but is, for example, an electric vehicle using a rotary electric machine as a traveling drive source. The rotary electric machine is supplied with power from the power receiving device 10 to rotate wheels 16.

In the present embodiment, the vehicle 11 includes a power receiving terminal (not illustrated). The power supplied to the power receiving device 10 is supplied to an electronic device (for example, a traveling drive source, a storage battery, a control device of the vehicle 11, and the like) included in the vehicle 11 via the power receiving terminal. Further, in the present embodiment, an attachment portion 41 is fixed to a vehicle body 14 of the vehicle 11. Examples of the vehicle body 14 include a monocoque body and a ladder frame body.

In the present embodiment, a lower surface of the power receiver 45 is in contact with the power feeder 32. A lower part or the whole of the power receiver 45 is made of, for example, a carbon-based material such as graphite, a metal-based material such as copper, a mixture thereof, or the like. The power supplied from the power feeder 32 to the power receiver 45 is sent to the power receiving terminal described above by an electric wire (not illustrated) or the like.

As illustrated in FIG. 1, the power receiving device 10 includes a base member 42 to be attached to the vehicle 11. The base member 42 is attached to a lower surface of the vehicle 11. In the present embodiment, the base member 42 is attached to the vehicle 11 via the attachment portion 41. The attachment portion 41 is a member extending in the vehicle width direction VY. Further, the base member 42 is a member extending in the vehicle front-rear direction VX. Note that the base member 42 may be attached to the vehicle 11 without the attachment portion 41.

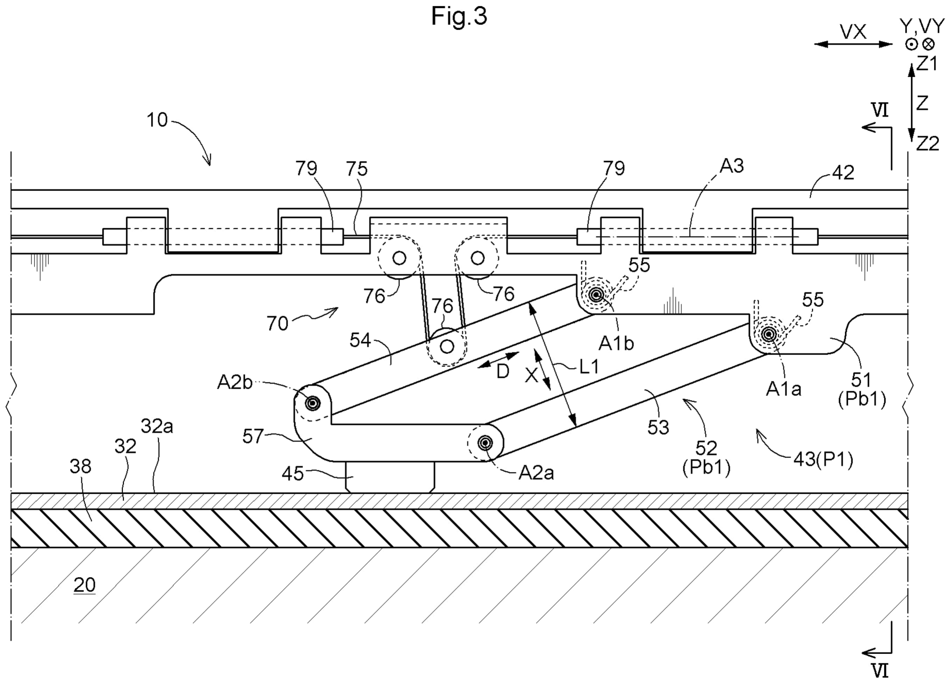

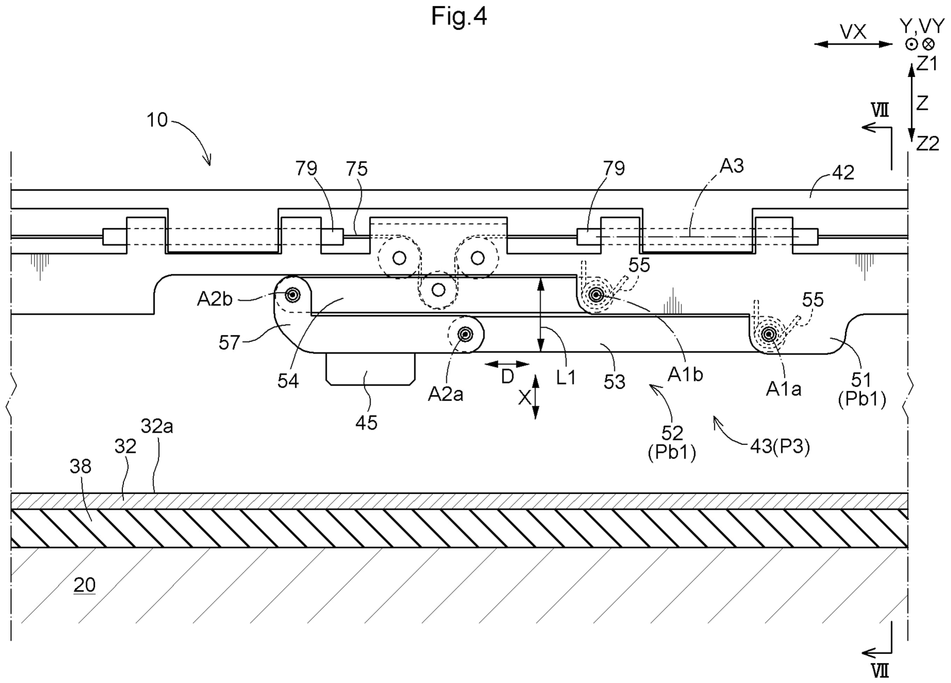

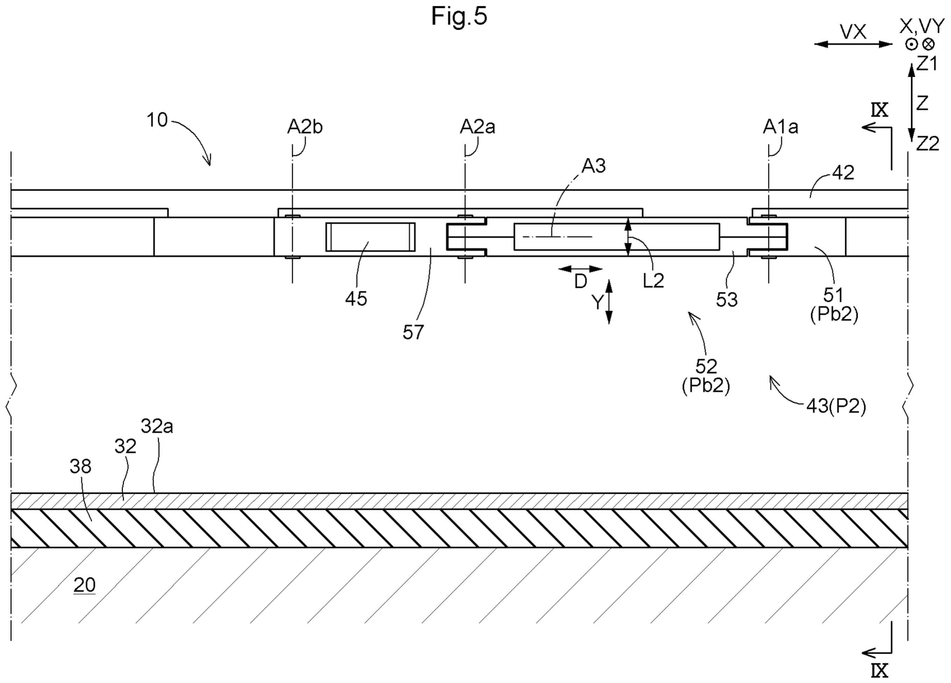

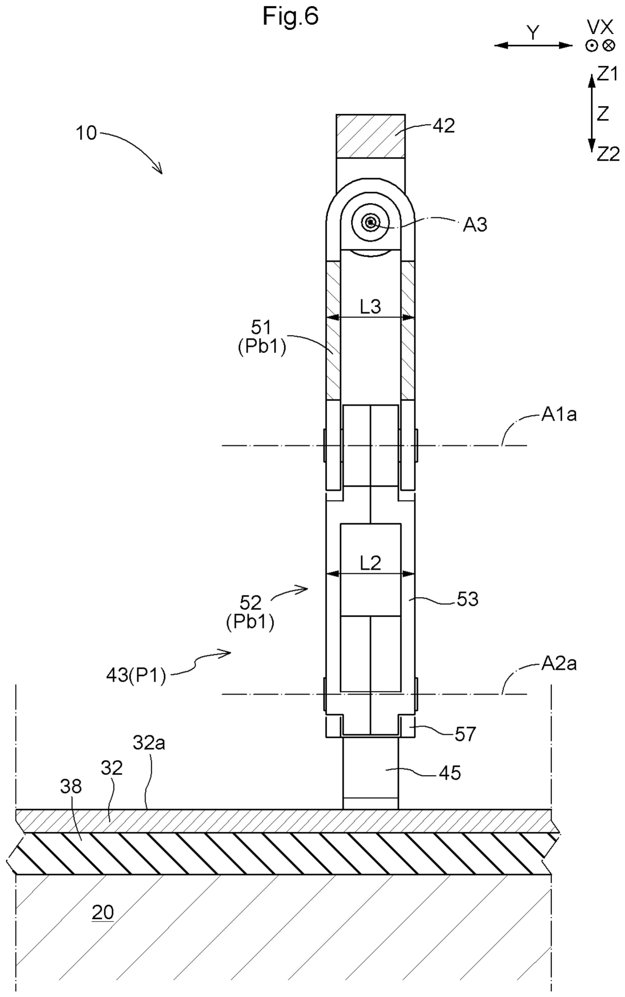

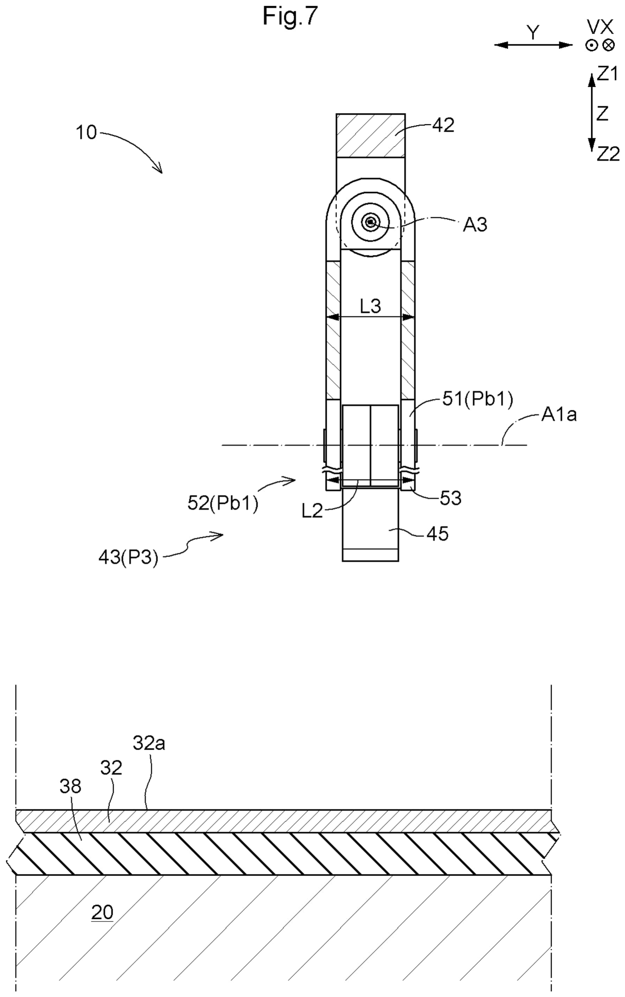

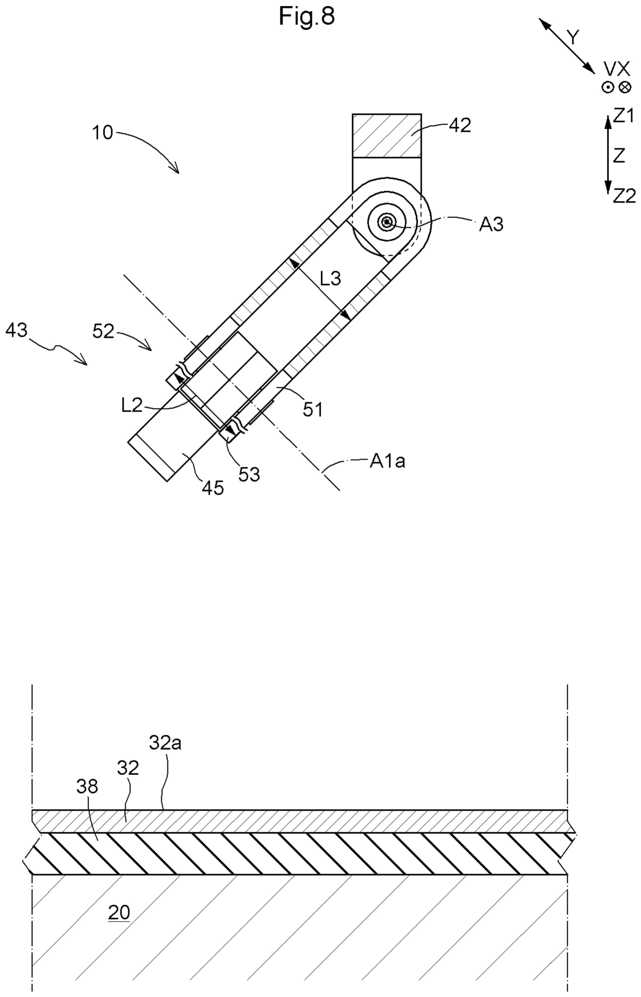

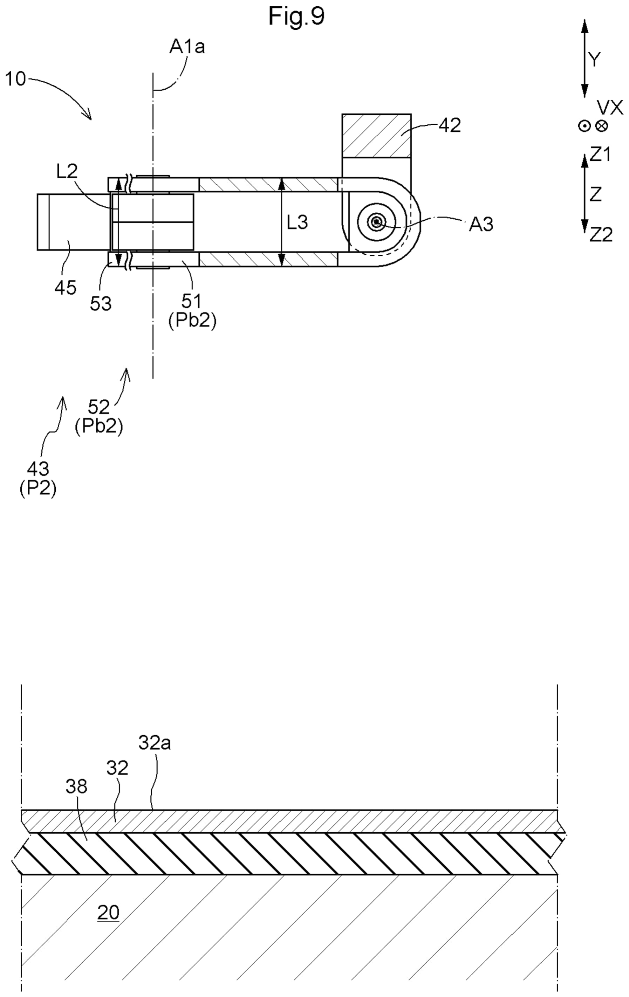

The power receiving device 10 includes the power receiver 45 that comes into contact with the power feeder 32 to receive power. In addition, the power receiving device 10 includes a coupling mechanism 43 that couples the base member 42 and the power receiver 45. FIG. 3 is a view illustrating a state where the coupling mechanism 43 is in a contact position P1. FIG. 4 is a view illustrating a state where the coupling mechanism 43 is in a contracted position P3. FIG. 5 is a view illustrating a state where the coupling mechanism 43 is in a stored position P2. FIG. 6 is a cross-sectional view taken along line VI-VI in FIG. 3. FIG. 7 is a cross-sectional view taken along line VII-VII in FIG. 4. FIG. 8 is a cross-sectional view illustrating a state where the coupling mechanism 43 laterally rotates. FIG. 9 is a cross-sectional view taken along line IX-IX in FIG. 5.

A position of the coupling mechanism 43 is changed between the contact position P1 in which the power receiver 45 is in contact with the power feeder 32 and the stored position P2 in which the power receiver 45 is separated from the power feeder 32, by a drive mechanism 60 to be described later. The coupling mechanism 43 includes a coupling member 51 that couples the base member 42 and a support arm 52. The coupling member 51 is coupled to the base member 42 to be swingable about a lateral rotation shaft center A3.

The coupling mechanism 43 includes the support arm 52 that supports the power receiver 45. The coupling mechanism 43 is configured such that the power receiver 45 is suspended by the support arm 52 in the contact position P1. In the present embodiment, the support arm 52 has a band plate shape having a rectangular cross section, but may be a member having other flat cross section such as an elliptical cross section. Further, the support arm 52 may be a hollow member, or may be a member in which a plurality of band plate-shaped members are layered at intervals. Here, a direction in which the support arm 52 extends is referred to as a "longitudinal direction D", a direction along a swing shaft center (A1a, A1b) to be described later is referred to as a "thickness direction Y", and a direction orthogonal to both the longitudinal direction D and the thickness direction Y is referred to as a "width direction X".

In the present embodiment, the support arm 52 is coupled to the coupling member 51 to be swingable about the swing shaft center (A1a, A1b). As illustrated in FIG. 3, in the contact position P1, the longitudinal direction D of the support arm 52 is inclined toward a lower side Z2 and a rear side in the vehicle front-rear direction VX as being closer to the power receiver 45 side from the swing shaft center (A1a, A1b). Further, in the contact position P1, the swing shaft center (A1a, A1b) is disposed along the vehicle width direction VY. Further, in the contact position P1, the thickness direction Y is a direction along the vehicle width direction VY. In the example illustrated in FIG. 3, in the contact position P1, the thickness direction Y is parallel to the vehicle width direction VY. Further, in the stored position P2, the thickness direction Y is a direction along the up-down direction Z. In the example illustrated in FIG. 5, in the contact position P1, the thickness direction Y is parallel to the up-down direction Z.

As illustrated in FIG. 3, the support arm 52 includes a plurality of arm members. In the present embodiment, the plurality of arm members constitute a link mechanism. In the illustrated example, the support arm 52 includes a first arm member 53 and a second arm member 54. Here, a swing shaft center of the first arm member 53 is defined as a first swing shaft center A1a, and a swing shaft center of the second arm member 54 is defined as a second swing shaft center A1b. The first swing shaft center A1a and the second swing shaft center A1b are arranged in parallel to each other. Further, the first arm member 53 and the second arm member 54 are arranged in parallel to each other while being separated from each other in the width direction X.

In the present embodiment, the first arm member 53, the second arm member 54, and a support member 57 that supports the power receiver 45 constitute a parallel link mechanism. A distal end portion 53a of the first arm member 53 away from the first swing shaft center A1a is coupled to the support member 57 supporting the power receiver 45 to be swingable about a third swing shaft center A2a, which is parallel to the first swing shaft center A1a and the second swing shaft center A1b. A distal end portion 54a of the second arm member 54 away from the second swing shaft center A1b is coupled to the support member 57 supporting the power receiver 45 to be swingable about a fourth swing shaft center A2b, which is parallel to the first swing shaft center A1a and the second swing shaft center A1b.

The parallel link mechanism is, for example, a four-bar link mechanism in which opposite links are equal in length. In the illustrated example, the coupling member 51, the support member 57, the first arm member 53, and the second arm member 54 constitute a parallel link mechanism. Further, a distance between the first swing shaft center A1a and the second swing shaft center A1b is equal to a distance between the third swing shaft center A2a and the fourth swing shaft center A2b.

The coupling mechanism 43 is configured to cause the support arm 52 to laterally rotate about the lateral rotation shaft center A3 along a direction intersecting the swing shaft center (A1a, A1b) in the contact position P1 as viewed in the up-down direction, to take a position in which the thickness direction Y of the support arm 52 is along a horizontal direction in the contact position P1, and a position in which the thickness direction Y of the support arm 52 is along the up-down direction Z in the stored position P2. Note that the thickness direction Y in the contact position P1 is not limited to the direction parallel to the horizontal direction, and may be inclined with respect to the parallel direction. Further, the thickness direction Y in the stored position P2 is not limited to the direction parallel to the up-down direction Z, and may be inclined with respect to the parallel direction.

In the present embodiment, an axial direction of the lateral rotation shaft center A3 is a direction along the vehicle front-rear direction VX, but may be a direction along the vehicle width direction VY. Further, in the present embodiment, the axial direction of the lateral rotation shaft center A3 is the horizontal direction, but may be inclined with respect to the horizontal direction. Further, in the present embodiment, the axial direction of the lateral rotation shaft center A3 is a direction orthogonal to the swing shaft center (A1a, A1b) as viewed in the up-down direction, but does not need to be the orthogonal direction as long as the axial direction intersects the swing shaft center (A1a, A1b). Further, the lateral rotation of the support arm 52 may be lateral rotation of the coupling member 51 with respect to the base member 42, or may be bending and swinging of the support arm 52 about the lateral rotation shaft center A3.

The support arm 52 is formed such that a dimension L1 in the width direction X is larger than a dimension L2 in the thickness direction Y. In the present embodiment, the dimension L1 of the support arm 52 in the width direction X is a dimension in the width direction X of one support member 57 supporting the power receiver 45 or the entire support arm 52 coupled to one power receiver 45. In addition, the dimension L2 of the support arm 52 in the thickness direction Y is a dimension in the thickness direction Y of one support member 57 supporting the power receiver 45 or the entire support arm 52 coupled to one power receiver 45. Further, for example, in a case where a member that laterally rotates about the lateral rotation shaft center A3 integrally with the first arm member 53 or the second arm member 54 is attached to the first arm member 53 or the second arm member 54, a dimension in the width direction X of the entire support arm 52 including the member is the dimension L1 in the width direction X described above, and a dimension in the thickness direction Y of the entire support arm 52 including the member is the dimension L2 in the thickness direction Y described above.

Here, the support arm 52 may include a plurality of arm members, and the dimension L1 of the support arm 52 in the width direction X or the dimension L2 of the support arm 52 in the thickness direction Y may be different between the contact position P1 and the stored position P2. In the present embodiment, the support arm 52 is formed such that the dimension L1 in the width direction X is larger than the dimension L2 in the thickness direction Y at least in the stored position P2. Further, in the present embodiment, the dimension L1 of the support arm 52 in the width direction X is formed to be larger than a dimension L3 of the coupling member 51 in the thickness direction Y. In addition, regarding the dimension L1 in the width direction X, the support arm 52 is formed such that the dimension L1 in the width direction X is larger than the dimension L3 of the coupling member 51 in the thickness direction Y at least in the stored position P2.

The power receiving device 10 includes the drive mechanism 60 that changes the position of the coupling mechanism 43 between the contact position P1 in which the power receiver 45 is in contact with the power feeder 32 and the stored position P2 in which the power receiver 45 is separated from the power feeder 32. The drive mechanism 60 is configured to be able to perform a lateral rotation operation of swinging the coupling member 51 and the support arm 52 about the lateral rotation shaft center A3, to take, in the contact position P1, a first position Pb1 in which the power receiver 45 is suspended by the support arm 52 and the swing shaft center (A1a, A1b) of the support arm 52 is along the horizontal direction, and to take, in the stored position P2, a second position Pb2 in which the swing shaft center (A1a, A1b) of the support arm 52 is along the up-down direction Z.

In the present embodiment, when the drive mechanism 60 changes the position of the coupling mechanism 43 from the stored position P2 to the contact position P1, the drive mechanism 60 swings the coupling member 51 about the lateral rotation shaft center A3 to cause the coupling mechanism 43 to take a position in which the thickness direction Y of the support arm 52 is along the horizontal direction, and then swings the support arm 52 about the swing shaft center (Ala, A1b) to lower the power receiver 45.

In the present embodiment, when the drive mechanism 60 changes the position of the coupling mechanism 43 from the contact position P1 to the stored position P2, the drive mechanism 60 swings the support arm 52 about the swing shaft center (A1a, A1b) to raise the power receiver 45, and then swings the coupling mechanism 43 about the lateral rotation shaft center A3 to take a position in which the thickness direction Y of the support arm 52 is along the up-down direction Z. FIGS. 4 and 7 illustrate a state where the coupling mechanism 43 is in the contracted position P3, that is, a state of the position in which the thickness direction Y of the support arm 52 is along the horizontal direction after the support arm 52 is swung about the swing shaft center (A1a, A1b) to raise the power receiver 45.

In the present embodiment, the drive mechanism 60 is configured to be able to perform swing restriction to restrict swing of the coupling member 51 about the lateral rotation shaft center A3 with respect to the base member 42 in each of the contact position P1 and the stored position P2, while allowing swing of the support arm 52 about the swing shaft center (A1a, A1b) with respect to the coupling member 51 in the contact position P1.

The drive mechanism 60 includes a drive device 65 (see FIG. 2) and a transmission mechanism 70 that transmits a driving force of the drive device 65 to the coupling member 51 and the support arm 52. The transmission mechanism 70 executes a lowering operation of lowering the power receiver 45 by swinging the support arm 52 about the swing shaft center (A1a, A1b) with the driving force of the drive device 65. In addition, the transmission mechanism 70 executes a lifting operation of lifting the power receiver 45 by swinging the support arm 52 about the swing shaft center (A1a, A1b) with the driving force of the drive device 65. Examples of the drive device 65 include a rotary electric machine, a pneumatic pump, a hydraulic pump, and a solenoid actuator.

In the present embodiment, the transmission mechanism 70 executes a lateral rotation operation of swinging the coupling member 51 and the support arm 52 about the lateral rotation shaft center A3 with the driving force of the drive device 65, to switch from the second position Pb2 to the first position Pb1. In addition, the transmission mechanism 70 executes the lateral rotation operation of swinging the coupling member 51 and the support arm 52 about the lateral rotation shaft center A3 with the driving force of the drive device 65, to switch from the first position Pb1 to the second position Pb2.

In the present embodiment, the transmission mechanism 70 is configured to sequentially execute: an unlock operation of releasing the restriction of swinging of the coupling member 51 about the lateral rotation shaft center A3 from the stored position P2 with the driving force of the drive device 65; a lateral rotation operation of swinging the coupling member 51 and the support arm 52 about the lateral rotation shaft center A3 to switch from the second position Pb2 to the first position Pb1 after completion of the unlock operation; a lock operation of restricting swinging of the coupling member 51 about the lateral rotation shaft center A3 after completion of the lateral rotation operation; and a lowering operation of lowering the power receiver 45 by swinging the support arm 52 about the swing shaft center (Ala, A1b) after completion of the lock operation.

In the present embodiment, the transmission mechanism 70 is configured to sequentially execute: a lifting operation of lifting the power receiver 45 by swinging the support arm 52 about the swing shaft center (A1a, A1b) from a state of the contact position P1 with the driving force of the drive device 65; an unlock operation of releasing the restriction of swinging of the coupling member 51 about the lateral rotation shaft center A3 after completion of the lifting operation; a lateral rotation operation of swinging the coupling member 51 and the support arm 52 about the lateral rotation shaft center A3 to switch from the first position Pb1 to the second position Pb2 after completion of the unlock operation; and a lock operation of restricting swinging of the coupling member 51 about the lateral rotation shaft center A3 after completion of the lateral rotation operation.

In the present embodiment, the transmission mechanism 70 includes a transmission member 75 that operates in a specific transmission direction B with the driving force of the drive device 65. In the example illustrated in FIG. 3, the transmission mechanism 70 includes a pulley 76. Examples of the transmission member 75 include a wire, a cable, a chain, and a gear.

In the illustrated example, the transmission mechanism 70 is disposed so as to pass through an inside of a tubular member 79 fixed to the base member 42 or the coupling member 51. One end portion of the transmission member 75 is fixed to the vehicle body 14, the attachment portion 41, or the base member 42, and the other end portion is pulled by the drive device 65, whereby the support arm 52 swings about the swing shaft center (A1a, A1b) to lift the power receiver 45. In addition, the coupling mechanism 43 includes a first elastic member 55 (see FIG. 3) that biases the support arm 52 with respect to the coupling member 51. The first elastic member 55 biases the support arm 52 with respect to the coupling member 51 in a direction in which the power receiver 45 is lowered and comes into contact with the power feeder 32. Examples of the first elastic member 55 include a coil spring, a torsion coil spring, and a leaf spring.

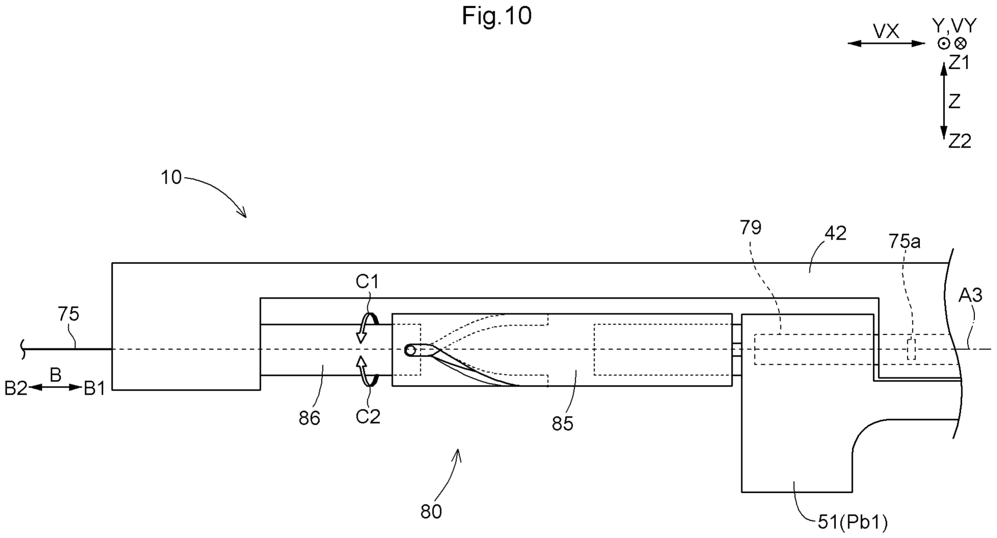

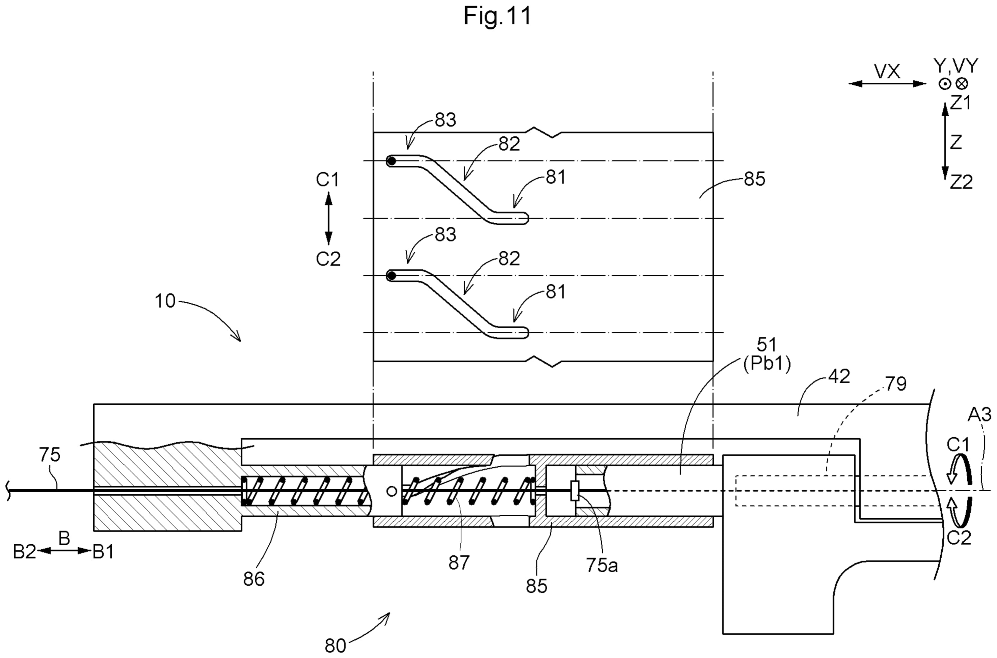

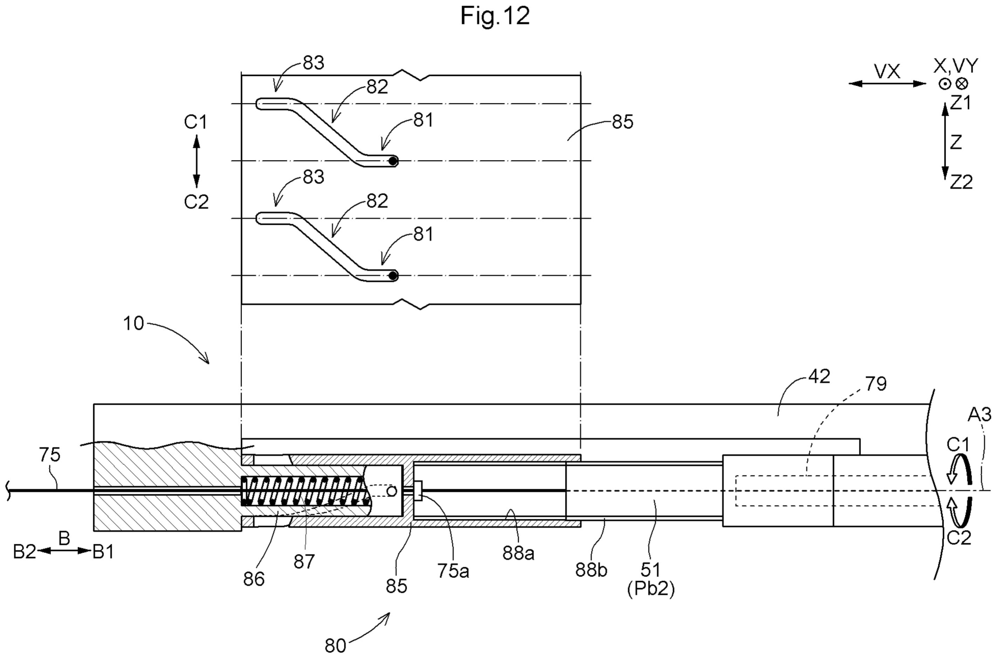

FIG. 10 is a side view of a cam mechanism 80 in a state where the coupling mechanism 43 is in the contact position P1. FIG. 11 is a cross-sectional view of the cam mechanism 80 in the state where the coupling mechanism 43 is in the contact position P1. FIG. 12 is a cross-sectional view of the cam mechanism 80 in a state where the coupling mechanism 43 is in the stored position P2. The transmission mechanism 70 includes the cam mechanism 80 that converts an operation of the transmission member 75 into an operation of the coupling member 51 and the support arm 52. Examples of the cam mechanism 80 include a three-dimensional cam mechanism such as a cylindrical cam, and a planar cam mechanism such as a plate-shaped cam.

In the present embodiment, the cam mechanism 80 includes a first cam member 85 and a second cam member 86. The first cam member 85 is coupled to the coupling member 51 so as not to be swingable about the lateral rotation shaft center A3. Further, the first cam member 85 is coupled to the coupling member 51 so as to be movable in the axial direction of the lateral rotation shaft center A3. Further, the first cam member 85 is coupled to the second cam member 86 to be swingable about the lateral rotation shaft center A3. Further, the second cam member 86 is fixed to the base member 42. In the example illustrated in FIG. 12, a groove portion 88a extending in the axial direction of the lateral rotation shaft center A3 is formed in an inner peripheral surface of the first cam member 85, and a protruding portion 88b fitted to the groove portion 88a is formed on an outer peripheral surface of the coupling member 51. As a result, the first cam member 85 is coupled to the coupling member 51 so as not to be swingable about the lateral rotation shaft center A3 and to be movable in the axial direction of the lateral rotation shaft center A3.

In the present embodiment, the cam mechanism 80 includes a second elastic member 87 that stores a driving force of the drive device 65. The second elastic member 87 biases the first cam member 85 with respect to the second cam member 86. Examples of the second elastic member 87 include a coil spring, a torsion coil spring, and a leaf spring. Note that FIGS. 11 and 12 illustrate developed views of the first cam member 85.

The transmission member 75 is configured to operate the cam mechanism 80 by operating toward a transmission direction first side B1, which is one side in the transmission direction B, in a predetermined first operation region. Further, the transmission member 75 is configured to swing the support arm 52 about the swing shaft center (A1a, A1b) to lower the power receiver 45, by operating toward the transmission direction first side B1 in a second operation region, which is located on the transmission direction first side B1 with respect to the first operation region.

The transmission member 75 is configured to operate the cam mechanism 80 by operating toward a transmission direction second side B2, which is the other side in the transmission direction B, in the predetermined first operation region. Further, the transmission member 75 is configured to swing the support arm 52 about the swing shaft center (A1a, A1b) to lift the power receiver 45, by operating toward the transmission direction second side B2 in the second operation region, which is located on the transmission direction first side B1 with respect to the first operation region.

In the present embodiment, the cam mechanism 80 is operated by locking, to the first cam member 85, a cam contact portion 75a fixed to the transmission member 75. In addition, the first operation region is a region where the cam contact portion 75a is locked to the first cam member 85. Further, the second operation region is a region where the cam contact portion 75a is not locked to the first cam member 85.

Here, one side of the cam mechanism 80 in the cam operation direction is defined as a cam operation direction first side C1, and the other side of the cam operation direction is defined as a cam operation direction second side C2. Examples of the cam operation direction include a rotation operation of a cylindrical cam, a rotation operation of a plate-shaped cam, and a linear operation of a plate-shaped cam or the like. In the illustrated example, the cam operation direction is a rotation direction of the first cam member 85 about the lateral rotation shaft center A3 with respect to the second cam member 86.

The cam mechanism 80 is configured to operate toward the cam operation direction first side C1 in accordance with the operation of the transmission member 75 toward the transmission direction first side B1 in the first operation region. Further, the cam mechanism 80 is configured to operate toward the cam operation direction second side C2 in accordance with the operation of the transmission member 75 toward the transmission direction second side B2 in the first operation region.

The cam mechanism 80 includes a first cam region 81, a second cam region 82, and a third cam region 83 having mutually different cam profiles. The second cam region 82 is a region on the cam operation direction first side C1 with respect to the first cam region 81. The third cam region 83 is a region on the cam operation direction first side C1 with respect to the second cam region 82.

The first cam region 81 is configured to restrict swinging of the coupling member 51 about the lateral rotation shaft center A3 to maintain the coupling member 51 in the second position Pb2. The second cam region 82 is configured to swing the coupling member 51 about the lateral rotation shaft center A3 from the second position Pb2 to the first position Pb1, in accordance with the operation of the cam mechanism 80 toward the cam operation direction first side C1. In addition, the second cam region 82 is configured to swing the coupling member 51 about the lateral rotation shaft center A3 from the first position Pb1 to the second position Pb2, in accordance with the operation of the cam mechanism 80 toward the cam operation direction second side C2. The third cam region 83 is configured to restrict swinging of the coupling member 51 about the lateral rotation shaft center A3 to maintain the coupling member 51 in the first position Pb1.

Returning to FIGS. 1 and 2, the power receiving device 10 includes a plurality of (three in the illustrated example) power receivers 45. In addition, the power receiving device 10 includes a plurality of coupling mechanisms 43 (three in the illustrated example). In the present embodiment, the plurality of power receivers 45 are arranged separately in the vehicle front-rear direction VX. Note that the plurality of power receivers 45 may be arranged separately in the vehicle front-rear direction VX and the vehicle width direction VY.

The drive mechanism 60 is configured to change the position of the plurality of coupling mechanisms 43 between the contact position P1 and the stored position P2 with one drive device 65. In the present embodiment, the drive device 65 and the transmission member 75 are provided in common in the plurality of coupling mechanisms 43, and the cam mechanism 80 is provided corresponding to each of the plurality of coupling mechanisms 43. Preferably, one drive device 65 is one drive source.

The power receiving device 10 includes a moving mechanism 90 that moves the coupling mechanism 43 and the power receiver 45 in the vehicle width direction VY with respect to the vehicle 11. In the present embodiment, the moving mechanism 90 moves the base member 42 in the vehicle width direction VY with respect to the attachment portion 41. Note that the moving mechanism 90 may move the coupling mechanism 43 and the power receiver 45 in the vehicle width direction VY and the vehicle front-rear direction VX, that is, move them obliquely with respect to the vehicle width direction VY. Examples of the moving mechanism 90 include a mechanism using a worm gear, a belt, or the like.

In the present embodiment, in a state where the coupling mechanism 43 is in the stored position P2, the coupling mechanism 43 and the power receiver 45 are entirely disposed within a range overlapping with the vehicle body 14 in the vehicle width direction VY as viewed in the up-down direction. Further, in the state where the coupling mechanism 43 is in the stored position P2, the coupling mechanism 43 and the power receiver 45 are entirely disposed within a range overlapping with the vehicle body 14 in the vehicle front-rear direction VX as viewed in the up-down direction. Note that a lower end of the coupling mechanism 43 may be located on an upper side Z1 with respect to a lower end of the vehicle body 14 in the state where the coupling mechanism 43 is in the stored position P2. Further, a lower end of the power receiver 45 may be located on the upper side Z1 with respect to the lower end of the vehicle body 14 in the state where the coupling mechanism 43 is in the stored position P2. The coupling mechanism 43 and the power receiver 45 are configured to be located, for example, between the storage battery of the vehicle 11 and the road surface 20a, in the state where the coupling mechanism 43 is in the stored position P2.

As described above, in the power receiving device 10 according to the present embodiment, the support arm 52 is formed such that the dimension L1 in the width direction X is larger than the dimension L2 in the thickness direction Y. The coupling mechanism 43 is configured to cause the support arm 52 to laterally rotate about the lateral rotation shaft center A3 along a direction intersecting the swing shaft center (the first swing shaft center A1a, the second swing shaft center A1b) as viewed in the up-down direction in the contact position P1, to take, in the contact position P1, a position in which the power receiver 45 is suspended by the support arm 52 and the thickness direction Y of the support arm 52 is along the horizontal direction, and take, in the stored position P2, a position in which the thickness direction Y of the support arm 52 is along the up-down direction Z.

According to the power receiving device 10 described above, the contact position P1 of the coupling mechanism 43 is a position in which the thickness direction Y of the support arm 52 is along the horizontal direction. Thus, a load in the up-down direction Z acting on the power receiver 45 suspended by the support arm 52 from the power feeder 32 and the road surface 20a can be made to act in the width direction X of the support arm 52. Therefore, it is easy to secure a strength of the support arm 52 while reducing a weight of the support arm 52. Further, according to this configuration, lateral rotation of the support arm 52 causes the coupling mechanism 43 to take a position in which the thickness direction Y of the support arm 52 is along the up-down direction Z in the stored position P2 of the coupling mechanism 43. Therefore, it is easy to suppress a disposition region of the support arm 52 in the stored position P2 to be small in the up-down direction Z. That is, it is easy to suppress a dimension of the power receiving device 10 to be small in the up-down direction Z in the non-power reception state. As a result, for example, even in a case where the coupling mechanism 43 is disposed on a lower surface of the vehicle 11, it is easy to secure a wide gap between the road surface 20a and the lower surface of the vehicle 11.

In the power receiving device 10 of the present embodiment, the coupling member 51 is coupled to the base member 42 to be swingable about the lateral rotation shaft center A3. In a case where the drive mechanism 60 changes the position of the coupling mechanism 43 from the stored position P2 to the contact position P1, the drive mechanism 60 swings the coupling member 51 about the lateral rotation shaft center A3 to cause the coupling mechanism 43 to take a position in which the thickness direction Y of the support arm 52 is along the horizontal direction, and then swings the support arm 52 about the swing shaft center (the first swing shaft center A1a, the second swing shaft center A1b) to lower the power receiver 45.

According to the power receiving device 10 described above, it is possible to relatively simply achieve the configuration in which the support arm 52 can laterally rotate. In addition, after the coupling member 51 is swung about the lateral rotation shaft center A3 to cause the support arm 52 to laterally rotate, the support arm 52 is swung about the swing shaft center (the first swing shaft center A1a, the second swing shaft center A1b) to lower the power receiver 45. Therefore, the power receiver 45 can be prevented from coming into contact with the road surface 20a or the power feeder 32 during the lateral rotation. Therefore, it is possible to appropriately perform the lateral rotation of the support arm 52 and the lowering of the power receiver 45.

In the power receiving device 10 of the present embodiment, in the contact position P1, the swing shaft center (the first swing shaft center A1a, the second swing shaft center A1b) is disposed along the vehicle width direction VY, and the longitudinal direction D of the support arm 52 is inclined toward the lower side Z2 and the rear side in the vehicle front-rear direction VX as being closer to the power receiver 45 side from the swing shaft center (the first swing shaft center A1a, the second swing shaft center A1b).

According to the power receiving device 10 described above, even when an interval in the up-down direction Z between the base member 42 and the power feeder 32 varies during traveling of the vehicle 11, the power receiver 45 can be moved up and down appropriately following the variation.

In the power receiving device 10 of the present embodiment, the first swing shaft center A1a and the second swing shaft center A1b are arranged in parallel to each other, the first arm member 53 and the second arm member 54 are arranged in parallel to each other while being separated from each other in the width direction X. Each of the distal end portion 53a of the first arm member 53, which is away from the first swing shaft center A1a, and the distal end portion 54a of the second arm member 54, which is away from the second swing shaft center A1b, is coupled to the power receiver 45 or the support member 57 supporting the power receiver 45, to be swingable about a shaft center (the third swing shaft center A2a, the fourth swing shaft center A2b) parallel to the first swing shaft center A1a and the second swing shaft center A1b. As a result, the first arm member 53, the second arm member 54, and the power receiver 45 or the support member 57 constitute a parallel link mechanism.

According to the power receiving device 10 described above, the power receiver 45 can be stably supported in the contact position P1, and a position of the power receiver 45 with respect to the power feeder 32 is easily maintained even when the power receiver 45 moves up and down due to a change in interval in the up-down direction Z between the base member 42 and the power feeder 32.

### [Other embodiments]

Next, other embodiments of the power receiving device 10 will be described.

(1) In the embodiment described above, the configuration has been described as an example in which the unlock operation, the lateral rotation operation, the lock operation, and the lowering operation are sequentially executed by the operation of the drive device 65. However, without limiting to such an example, for example, the lock operation may be executed in the middle of the lowering operation. Further, for example, the lateral rotation operation and the lowering operation may be alternately executed a plurality of times.
(2) In the embodiment described above, the configuration has been described as an example in which the lifting operation, the unlock operation, the lateral rotation operation, and the lock operation are sequentially executed by the operation of the drive device 65. However, without limiting to such an example, for example, the unlock operation may be executed before the lifting operation or in the middle of the lifting operation. Further, for example, the lateral rotation operation and the lifting operation may be alternately executed a plurality of times.
(3) In the embodiment described above, the configuration has been described as an example in which the drive mechanism 60 includes the drive device 65 and the transmission mechanism 70, and the transmission mechanism 70 includes the transmission member 75 and the cam mechanism 80, to perform the swing restriction, the lateral rotation operation, the lock operation, the unlock operation, the lifting operation, the lowering operation, and the like. However, without limiting to such an example, for example, a configuration may be adopted in which the transmission mechanism 70 includes a worm gear instead of the cam mechanism 80, and the swing restriction is executed by a self-lock function of the worm gear. Furthermore, for example, a configuration may be adopted in which the transmission mechanism 70 includes a gear mechanism, and the swing restriction is executed by locking the gear with a lock pin or the like. Furthermore, for example, a configuration may be adopted in which the transmission mechanism 70 transmits a driving force by using hydraulic pressure or atmospheric pressure. Similarly, a configuration may be adopted in which the lateral rotation operation, the lock operation, the unlock operation, the lifting operation, the lowering operation, and the like are executed by the drive device 65 and the transmission mechanism 70 having the above-described configurations.
(4) In the embodiment described above, the configuration has been described as an example in which, by one drive device 65, a plurality of the support arms 52 are swung about the swing shaft center (A1a, A1b) and a plurality of the coupling members 51 and the plurality of support arms 52 are swung about the lateral rotation shaft center A3. However, without limiting to such an example, for example, a configuration may be adopted in which the plurality of support arms 52 are swung around the swing shaft center (A1a, A1b) by a plurality of drive devices 65. Further, for example, a configuration may be adopted in which the plurality of coupling members 51 and the plurality of support arms 52 are swung about the lateral rotation shaft center A3 by the plurality of drive devices 65. Further, the drive device 65 may be different between the drive device 65 that causes the support arm 52 to swing about the swing shaft center (A1a, A1b) and the drive device 65 that causes the plurality of coupling members 51 and the plurality of support arms 52 to swing about the lateral rotation shaft center A3.
(5) In the embodiment described above, the configuration has been described as an example in which the coupling member 51 is coupled to the base member 42 to be swingable about the lateral rotation shaft center A3. However, without limiting to such an example, for example, the coupling member 51 may be integrally formed with the base member 42, or may be a separate member and may be integrally fixed to the base member 42.
(6) In the embodiment described above, the configuration has been described as an example in which, in the contact position P1, the swing shaft center (A1a, A1b) is disposed along the vehicle width direction VY, and the longitudinal direction D of the support arm 52 is inclined toward the lower side Z2 and the rear side in the vehicle front-rear direction VX as being closer to the power receiver 45 side from the swing shaft center (A1a, A1b). However, without limiting to such an example, for example, in the contact position P1, the swing shaft center (A1a, A1b) is disposed along the vehicle front-rear direction VX, and the longitudinal direction D of the support arm 52 is inclined toward the lower side Z2 and the rear side in the vehicle front-rear direction VX as being closer to the power receiver 45 side from the swing shaft center (A1a, A1b). Further, the longitudinal direction D of the support arm 52 does not need to be inclined toward the lower side Z2 and the rear side in the vehicle front-rear direction VX as being closer to the power receiver 45 side from the swing shaft center (A1a, A1b).
(7) In the embodiment described above, the configuration has been described as an example in which the support arm 52 includes the first arm member 53 and the second arm member 54. However, without limiting to such an example, for example, the support arm 52 may be one longitudinal member. Further, for example, the first swing shaft center A1a and the second swing shaft center A1b may be the same shaft center. Further, for example, the third swing shaft center A2a and the fourth swing shaft center A2b may be the same shaft center.
(8) In the embodiment described above, the configuration has been described as an example in which each of the distal end portion 53a of the first arm member 53 and the distal end portion 54a of the second arm member 54 is coupled to the support member 57 to be swingable. However, without limiting to such an example, for example, each of the distal end portion 53a of the first arm member 53 and the distal end portion 54a of the second arm member 54 may be coupled to the power receiver 45 to be swingable about the shaft center (the third swing shaft center A2a and the fourth swing shaft center A2b) parallel to the first swing shaft center A1a and the second swing shaft center A1b, and the first arm member 53, the second arm member 54, and the power receiver 45 may constitute a parallel link mechanism.
(9) In the embodiment described above, the configuration has been described as an example in which the thickness direction Y is a direction along the vehicle width direction VY in the contact position P1, and is a direction along the up-down direction Z in the stored position P2. However, without limiting to such an example, for example, the thickness direction Y may be a direction along the vehicle front-rear direction VX in the contact position P1, and may be a direction along the up-down direction Z in the stored position P2.
(10) In the embodiment described above, the configuration has been described as an example in which the power receiver 45 is lifted when the other end portion of the transmission member 75 is pulled by the drive device 65, and the power receiver 45 is lowered by the first elastic member 55. However, without limiting to such an example, for example, a configuration may be adopted in which the power receiver 45 is lowered when the other end portion of the transmission member 75 is pulled by the drive device 65, and the power receiver 45 may be lifted by the first elastic member 55. Further, for example, a configuration may be adopted in which the lifting operation is executed when one end portion of the transmission member 75 is pulled by the drive device 65, and the lowering operation is executed when the other end portion of the transmission member 75 is pulled by another drive device 65.
(11) Note that the configuration disclosed in the above-described embodiment can be applied in combination with the configuration disclosed in another embodiment as long as there is no contradiction. Regarding other configurations, the embodiment disclosed in the present specification is merely an example in all respects. Therefore, various modifications can be appropriately made without departing from the gist of the present disclosure.

### [Summary of present embodiment]

Hereinafter, the automotive power receiving device (10) described above will be briefly summarized.

As one aspect, an automotive power receiving device (10) is an automotive power receiving device (10) that is mounted on a vehicle (11) and receives power supply during traveling of the vehicle (11), from a power feeding facility (30) provided with a power feeder (32) that is installed on a road surface (20a) of a road (20) so as to extend along the road (20), the automotive power receiving device (10) including: a base member (42) attached to the vehicle (11); a power receiver (45) configured to come into contact with the power feeder (32) to receive power; a coupling mechanism (43) that couples the base member (42) and the power receiver (45); and a drive mechanism (60) configured to change a position of the coupling mechanism (43) between a contact position (P1) in which the power receiver (45) is in contact with the power feeder (32) and a stored position (P2) in which the power receiver (45) is separated from the power feeder (32), the coupling mechanism (43) includes: a support arm (52) configured to support the power receiver (45); and a coupling member (51) that couples the base member (42) and the support arm (52), the support arm (52) is coupled to the coupling member (51) to be swingable about a swing shaft center (A1a, A1b), when a direction in which the support arm (52) extends is defined as a longitudinal direction (D), a direction along the swing shaft center (A1a, A1b) is defined as a thickness direction (Y), and a direction orthogonal to both the longitudinal direction (D) and the thickness direction (Y) is defined as a width direction (X), the support arm (52) is formed such that a dimension (L1) in the width direction (X) is larger than a dimension (L2) in the thickness direction (Y), and the coupling mechanism (43) is configured to cause the support arm (52) to laterally rotate about a lateral rotation shaft center (A3) along a direction intersecting the swing shaft center (A1a, A1b) as viewed in an up-down direction in the contact position (P1), to take, in the contact position (P1), a position in which the power receiver (45) is suspended by the support arm (52) and the thickness direction Y of the support arm (52) is along a horizontal direction, and take, in the stored position (P2), a position in which the thickness direction Y of the support arm (52) is along an up-down direction (Z).

According to this configuration, the contact position (P1) of the coupling mechanism (43) is a position in which the thickness direction (Y) of the support arm (52) is along the horizontal direction. Thus, a load in the up-down direction (Z) acting on the power receiver (45) suspended by the support arm (52) from the power feeder (32) and the road surface (20a) can be made to act in the width direction (X) of the support arm (52). Therefore, it is easy to secure a strength of the support arm (52) while reducing a weight of the support arm (52). Further, according to this configuration, lateral rotation of the support arm (52) causes the coupling mechanism (43) to take a position in which the thickness direction (Y) of the support arm (52) is along the up-down direction (Z) in the stored position (P2) of the coupling mechanism (43). Therefore, it is easy to suppress a disposition region of the support arm (52) in the stored position (P2) to be small in the up-down direction (Z). That is, it is easy to suppress a dimension of the power receiving device (10) in the up-down direction (Z) to be small in the non-power reception state. As a result, for example, even in a case where the coupling mechanism (43) is disposed on a lower surface of the vehicle (11), it is easy to secure a wide gap between the road surface (20a) and the lower surface of the vehicle (11).

As one aspect, the coupling member (51) is coupled to the base member (42) to be swingable about the lateral rotation shaft center (A3). When the drive mechanism (60) changes the position of the coupling mechanism (43) from the stored position (P2) to the contact position (P1), the drive mechanism (60) swings the coupling member (51) about the lateral rotation shaft center (A3) to cause the coupling mechanism (43) to take a position in which the thickness direction Y of the support arm (52) is along a horizontal direction, and then swings the support arm (52) about the swing shaft center (the first swing shaft center A1a, the second swing shaft center A1b) to lower the power receiver (45).

According to this configuration, it is possible to relatively simply achieve the configuration in which the support arm (52) can laterally rotate. Further, after the coupling member (51) is swung about the lateral rotation shaft center (A3) to cause the support arm (52) to laterally rotate, the support arm (52) is swung about the swing shaft center (the first swing shaft center A1a, the second swing shaft center A1b) to lower the power receiver (45). Thus, it is possible to prevent the power receiver (45) from coming into contact with the road surface (20a) or the power feeder (32) during the lateral rotation. Therefore, it is possible to appropriately perform the lateral rotation of the support arm (52) and the lowering of the power receiver (45).

As one aspect, when a front-rear direction of the vehicle (11) is defined as a vehicle front-rear direction (VX), and a direction orthogonal to the vehicle front-rear direction (VX) as viewed in an up-down direction is defined as a vehicle width direction (VY), the swing shaft center (the first swing shaft center A1a, the second swing shaft center A1b) is disposed along the vehicle width direction (VY) in the contact position (P1), and the longitudinal direction (D) of the support arm (52) is inclined toward a lower side (Z2) and a rear side in the vehicle front-rear direction (VX) as being closer to the power receiver (45) side from the swing shaft center (the first swing shaft center A1a, the second swing shaft center A1b).

According to this configuration, even when an interval in the up-down direction (Z) between the base member (42) and the power feeder (32) varies during traveling of the vehicle (11), the power receiver (45) can be moved up and down appropriately following the variation.

As one aspect, the support arm (52) includes a first arm member (53) and a second arm member (54). When a swing shaft center of the first arm member (53) is defined as a first swing shaft center (A1a) and a swing shaft center of the second arm member (54) is defined as a second swing shaft center (A1b), the first swing shaft center (A1a) and the second swing shaft center (A1b) are arranged in parallel to each other, and the first arm member (53) and the second arm member (54) are arranged in parallel to each other while being separated from each other in the width direction (X). Each of a distal end portion (53a) of the first arm member (53), which is away from the first swing shaft center (A1a), and a distal end portion (54a) of the second arm member (54), which is away from the second swing shaft center (A1b), is coupled to a power receiver (45) or a support member (57) supporting the power receiver (45), to be swingable about a shaft center (the third swing shaft center A2a, the fourth swing shaft center A2b) parallel to the first swing shaft center (A1a) and the second swing shaft center (A1b), and the first arm member (53), the second arm member (54), and the power receiver (45) or the support member (57) constitute a parallel link mechanism.

According to this configuration, the power receiver (45) can be stably supported in the contact position (P1), and a position of the power receiver (45) with respect to the power feeder (32) is easily maintained even when the power receiver (45) moves up and down due to a change in interval in the up-down direction (Z) between the base member (42) and the power feeder (32).

The automotive power receiving device (10) according to the present disclosure only needs to be able to exhibit at least one of the effects described above.

### REFERENCE SIGNS LIST

10: Power receiving device (automotive power receiving device), 11: Vehicle, 20: Road, 20a: Road surface, 30: Power feeding facility, 32: Power feeder, 42: Base member, 43: Coupling mechanism, 45: Power receiver, 51: Coupling member, 52: Support arm, 53: First arm member, 53a: Distal end portion, 54: Second arm member, 54a: Distal end portion, 51: Coupling member, 57: Support member, 60: Drive mechanism, A1a: First swing shaft center (swing shaft center), A1b: Second swing shaft center (swing shaft center), A2a: Third swing shaft center (parallel shaft center), A2b: Fourth swing shaft center (parallel shaft center), A3: Lateral rotation shaft center, D: Longitudinal direction, L1: Dimension in width direction, L2: Dimension in thickness direction, P1: Contact position, and P2: Stored position

## Claims

1. An automotive power receiving device that is mounted on a vehicle and receives power supply during traveling of the vehicle, from a power feeding facility including a power feeder that is installed on a road surface of a road to extend along the road,
the automotive power receiving device comprising:
a base member to be attached to the vehicle;
a power receiver configured to come in contact with the power feeder to receive power;
a coupling mechanism that couples the base member and the power receiver; and
a drive mechanism configured to change a position of the coupling mechanism between a contact position in which the power receiver is in contact with the power feeder and a stored position in which the power receiver is separated from the power feeder, wherein
the coupling mechanism includes:
a support arm configured to support the power receiver; and
a coupling member that couples the base member and the support arm,
the support arm is coupled to the coupling member to be swingable about a swing shaft center,
when a direction in which the support arm extends is defined as a longitudinal direction, a direction along the swing shaft center is defined as a thickness direction, and a direction orthogonal to both the longitudinal direction and the thickness direction is defined as a width direction,
the support arm is formed to have a larger dimension in the width direction than a dimension in the thickness direction, and
the coupling mechanism is configured to cause the support arm to laterally rotate about a lateral rotation shaft center along a direction intersecting the swing shaft center as viewed in an up-down direction in the contact position, to take, in the contact position, a position in which the power receiver is suspended by the support arm and the thickness direction of the support arm is along a horizontal direction, and take, in the stored position, a position in which the thickness direction of the support arm is along an up-down direction.

2. The automotive power receiving device according to claim 1, wherein
the coupling member is coupled to the base member to be swingable about the lateral rotation shaft center, and
when the drive mechanism changes a position of the coupling mechanism from the stored position to the contact position, the drive mechanism swings the coupling member about the lateral rotation shaft center to take a position in which the thickness direction of the support arm is along a horizontal direction, and then swings the support arm about the swing shaft center to lower the power receiver.

3. The automotive power receiving device according to claim 1, wherein
when a front-rear direction of the vehicle is defined as a vehicle front-rear direction, and a direction orthogonal to the vehicle front-rear direction as viewed in an up-down direction is defined as a vehicle width direction,
in the contact position, the swing shaft center is disposed along the vehicle width direction, and the longitudinal direction of the support arm is inclined toward a lower side and a rear side in the vehicle front-rear direction as being closer to the power receiver side from the swing shaft center.

4. The automotive power receiving device according to any one of claims 1 to 3, wherein
the support arm includes a first arm member and a second arm member, when the swing shaft center of the first arm member is defined as a first swing shaft center and the swing shaft center of the second arm member is defined as a second swing shaft center,
the first swing shaft center and the second swing shaft center are arranged in parallel to each other,
the first arm member and the second arm member are arranged in parallel to each other while being separated from each other in the width direction, and
each of a distal end portion of the first arm member away from the first swing shaft center and a distal end portion of the second arm member away from the second swing shaft center is coupled to the power receiver or a support member that supports the power receiver, to be swingable about a shaft center parallel to the first swing shaft center and the second swing shaft center, and the first arm member, the second arm member, and the power receiver or the support member constitutes a parallel link mechanism.
